# EUROPÄISCHE PATENTSCHRIFT

(11) **EP 0 552 414 B1**
(45) Veröffentlichungstag und Bekanntmachung des Hinweises auf die Patenterteilung: **10.04.1996**
(21) Anmeldenummer: 92116812.6
(22) Anmeldetag: 01.10.1992
(51) Int. Cl.: B23B 31/40

(54) **Verstellbarer Spanndorn**
Expansion mandrel
Mandrin extensible

(30) Priorität: 02.12.1991 DE 9114937 U
(43) Veröffentlichungstag der Anmeldung: 28.07.1993
(73) Patentinhaber: UNIMA-Präzisionsmaschinen GmbH, D-61381 Friedrichsdorf (DE)
(72) Erfinder: Lehnen, Mike, W-6380 Bad Homburg 6 (DE)
(74) Vertreter: Schubert, Siegmar, Dipl.-Ing.

(56) Entgegenhaltungen:
- FR-A- 906 878
- GB-A- 560 553
- US-A- 2 544 633

## Beschreibung

Die Erfindung betrifft einen verstellbaren Spanndorn, insbesondere Prüfdorn, gemäß dem Oberbegriff des Anspruchs 1.

Zum Stand der Technik gehört ein verstellbarer Spanndorn in einer Ausbildung als Hülsenspanndorn, der einen Kern mit einer darübergeschobenen Hülse aus dünnem Material umfaßt. Die Hülse ist mit Fett gefüllt und kann mit Druck beaufschlagt werden, um das Material der Hülse je nach dem auf dem Fett lastenden Druck mehr oder weniger auszudehnen. Nachteilig ist dabei, daß dieser Hülsenspanndorn nur einen kleinen Spannbereich überstreichen kann. Abgesehen davon ist für eine gute Abdichtung des Fetts in der Hülse zu sorgen, was jedoch langzeitig nicht immer gelingt. Vielmehr muß damit gerechnet werden, daß die Hülse undicht wird und Fett heraustritt.

Bekannt sind weiterhin glatte konische Dorne, die jedoch nicht verstellbar sind und deswegen konstruktionsgebunden begrenzt einsetzbar sind.

Bei einem bekannten verstellbaren Spanndorn der eingangs genannten Gattung sind aus einem massiven Führungsringteil Ausnehmungen ausgeformt, in denen je eine von einem der Spannbacken abstehende Nase verschiebbar ist (FR-A-906 878). Die Spannbacken sollen in je einer konisch verlaufenden Nut in einem Kern durch Druckfedern sicher geführt werden, die in einem Verschlußring des Führungsringteils angeordnet sind. Bei den Druckfedern handelt es sich um Schraubenfedern, die in radial verlaufenden Bohrungen in dem Verschlußring gehal ten sind und die jeweils einerseits radial gegen das Führungsringteil und andererseits gegen den Spannbacken drücken.

Bei einem anderen bekannten verstellbaren Spanndorn wird jede von drei Spannbacken in je eine zugeordnete V-förmige Nut des Kerns durch zwei blattförmige, gewölbte Federn gedrückt, die beiseitig an in Längsrichtung verlaufenden Vorsprüngen oder in Längsnuten der Spannbacken eingreifen (GB-A-560 553). Jede blattförmige Feder, die sich im wesentlichen in Längsrichtung des Spanndorns erstreckt, ist mit zwei in dieser Richtung hintereinander angeordneten Schrauben an dem Kern angeschraubt. - In einer anderen Ausführungsform dieses Spanndorns werden die Spannbacken durch einen Federring, der die äußeren Enden der Spannbacken einschließt, zusammengehalten.

Die letztgenannte Ausführungsform entspricht im wesentlichen einem weiteren zum Stand der Technik gehörenden Spanndorn, bei dem ein einziger Federring in Umfangsrichtung des Spanndorns drei Spannkeile umgreift, die hier jedoch in Nuten rechteckförmigen Querschnitts in den Kern hineinreichen (US-A-2 544 633).

Der vorliegenden Erfindung liegt die Aufgabe zugrunde, einen verstellbaren Spanndorn mit einem großen Spannbereich zu schaffen, der auch langzeitig einwandfrei funktioniert und einfach gehandhabt werden kann. Der Spanndorn soll sich außerdem durch eine hohe Rundlaufgenauigkeit auszeichnen.

Diese Aufgabe wird erfindungsgemäß durch eine Ausbildung des gattungsgemäßen Spanndorns nach dem kennzeichnenden Teil des Anspruchs 1 gelöst.

Dabei werden die Spannbacken in einem axialbeweglichen Führungsring radial verschiebbar gehalten, in welchem für jede Spannbacke eine Profilfeder untergebracht ist, welche die Spannbacke gegen die Schräge der Nut drückt. Die Profilfedern sind durch ihre Eigenspannung in dem Führungsring gehalten und im wesentlichen in Umfangsrichtung in dem Führungsring orientiert.

Durch Verschiebung des Führungsrings können die Spannbacken in den kegelförmig verlaufenden Nuten verschoben werden und je nach der Position des Führungsrings mehr oder weniger weit nach außen bewegt werden, bis die Spannbacken an einem Innendurchmesser eines zu prüfenden Teils spannen. Entspannt werden können die Prüfteile durch einen entgegengesetzten leichten Druck an dem Führungsring, wodurch die äußeren Spannflächen der Spannbacken radial nach innen bewegt werden.

Dabei weist der verstellbare Spanndorn über den ermöglichten großen Spannbereich eine hohe Rundlaufgenauigkeit auf.

Dies gilt insbesondere dann, wenn nach Anspruch 3 aus dem Kern drei je eine Spannbacke aufnehmende Nuten in Umfangsrichtung des Kerns um 120° gegeneinander versetzt ausgeformt sind.

In Verbindung mit der Ausbildung des Spanndorns gemäß Anspruch 1 wird durch die Verschiebung der Spannbacken, die mittels ihrer schrägen Gleitflächen auf den Schrägen der Nuten gleiten, erreicht, daß die Spannflächen stets parallel zur Hauptachse des Spanndorns und damit parallel zueinander ausgerichtet sind.

Die axiale Beweglichkeit des Führungsrings in vorgegebenen Grenzen wird vorteilhaft nach Anspruch 4 dadurch erreicht, daß der Führungsring in einer Nut in einem zylindrischen Abschnitt des Kerns mittels einer in die Nut hereinreichenden Feststellschraube axial begrenzt beweglich geführt ist.

Ein besonders großer Spannbereich kann mit einer Ausbildung der Spannbacken nach Anspruch 5 erzielt werden, indem jede Spannbacke wenigstens zwei abgestufte achsparallele Spannflächen aufweist. Je nach dem zu messenden Innendurchmesser kann damit eine Spannfläche kleineren Abstands oder größeren Abstands von der Mittellinie des Kerns verwendet werden.

Der Spanndorn wird insbesondere bei der Verwendung als Prüfdorn zwischen Spitzen aufgenommen. Hierzu weist der Kern nach Anspruch 6 an seinen Stirnflächen je eine zentral kegelige Ausnehmung auf, in welche die Spitzen hineinreichen können.

Eine Ausführungsform der Erfindung wird im folgenden anhand der Zeichnung mit zwei Figuren erläutert. Es zeigen:
- Fig. 1: eine Seitenansicht auf einen verstellbaren Spanndorn, teilweise geschnitten, und
- Fig. 2: eine Ansicht auf die Vorderseite des Spanndorns nach Fig. 1.

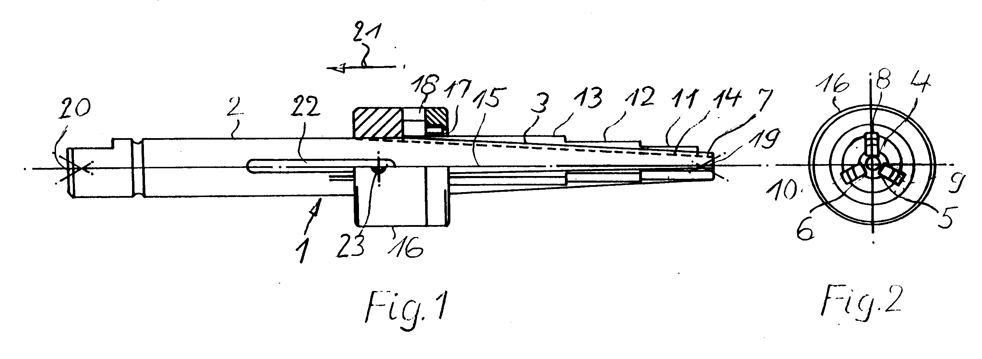

In Fig. 1 ist allgemein mit 1 ein Kern eines Spanndorns bezeichnet, der einen zylindrischen Abschnitt 2 und einen kegelförmigen Abschnitt 3 aufweist. In dem kegelförmigen Abschnitt sind drei Nuten 4-6 in Umfangsrichtung um 120° gegeneinander versetzt ausgeformt, die ebenfalls kegelförmig bzw. konisch zueinander verlaufen. Somit weist jede der Nuten an ihrem Grund eine Schräge, z.B. 7, auf. In jeder der Nuten ist eine Spannbacke 8 bzw. 9 bzw. 10 gelagert, die gemäß Fig. 1 drei abgestufte äußere Spannflächen 11-13 sowie eine innere schräge Gleitfläche 14 aufweist. Die Gleitfläche ist dabei in gleichem Maße abgeschrägt wie die Steigung der Schräge 7 der zugehörigen Nut. Damit sind die Spannflächen, z.B. 11-13, sämtlicher Spannbacken stets parallel zueinander und zu einer Längsachse 15 des Spanndorns ausgerichtet.

Die Spannbacken 8-10 werden in einem Führungsring 16 radial verschiebbar gehalten, indem jeweils eine von jeder Spannbacke abstehende Nase in je eine Ausnehmung 18 in den Führungsring hineinreicht, in der die Nase radial verschiebbar ist. Die Spannbacken werden durch Profilfedern, z.B. 17, radial nach innen zu der mittleren Längsachse 15 gedrückt. Die Profilfedern sind durch Eigenspannung in dem Führungsring gehalten.

Der Kern 1 weist an seinen Stirnseiten kegelige Ausnehmungen 19, 20 auf, an denen der Spanndorn durch nicht dargestellte Spitzen gehalten werden kann.

Zum Spannen werden die Spannbacken 8-10 durch verschieben des Führungsrings 16 in Richtung des Pfeils 21 in die gleiche axiale Richtung und außerdem radial nach außen verschoben, da die Gleitflächen, z.B. 14, an den Schrägen, z.B. 7, entlanggleitend nach außen gedrückt werden. Zum Entspannen wird der Führungsring in entgegengesetzter Richtung geschoben, wobei die Spannbacken durch die Profilfedern radial nach innen gedrückt werden.

Die Bewegung des Führungsrings 16 in axialer Richtung ist durch eine Nut 22 in dem Kern begrenzt, in die eine Feststellschraube 23, die in den Führungsring eingelassen ist, hineinreicht.

Varianten des Spanndorns können mit Spannbacken ausgebildet sein, die jeweils nur eine äußere Spannfläche aufweisen; andere Varianten können besonders kompakt, d.h. in axialer Richtung kurz ausgebildet sein.

## Patentansprüche

1. Verstellbarer Spanndorn, insbesondere Prüfdorn, mit einem Kern und einem über diesen geschobenen ringförmigen Körper, wobei aus einem konischen Abschnitt (2) des Kerns kegelförmig verlaufende Nuten (4-6) mit einer Schräge (7) ausgeformt sind, wobei in jeder Nut eine Spannbacke (8-10) im wesentlichen axial verschiebbar ist, die wenigstens eine achsparallele äußere Spannfläche (11-13) und eine innere, schräge Gleitfläche (14) aufweist, welche an die Steigung der Schräge (7) der Nut angepaßt ist, und wobei die Spannbacken (8-10) in einem axial beweglichen Führungsring (16) radial verschiebbar gehalten sind und unter einer auf sie wirkenden Federkraft gegen die Schrägen (7) der Nuten (4-6) gedrückt werden,
**dadurch gekennzeichnet,**
daß in den Führungsring (16) für jede Spannbacke (8-10) nur eine Profilfeder (17) angeordnet ist, die durch Eigenspannung in dem Führungsring (16) gehalten ist, dergestalt, daß sie im wesentlichen in Umfangsrichtung in dem Führungsring (16) orientiert wird und mittig an der Spannbacke (8-10) anliegt.

2. Verstellbarer Spanndorn nach Anspruch 2,
**dadurch gekennzeichnet,**
daß in dem Führungsring (16) radial verlaufende Montagebohrungen (18) gebohrt sind und daß in den Montagebohrungen jeweils eine von jeder Spannbacke (8-12) abstehende Nase radial verschiebbar ist.

3. Verstellbarer Spanndorn nach Anspruch 2,
**dadurch gekennzeichnet,**
daß aus dem Kern (1) drei je eine Spannbacke (8-10) aufnehmende Nuten in Umfangsrichtung des Kerns um 120° gegeneinander versetzt ausgeformt sind und daß in dem Führungsring (16) drei um gleiche Winkel gegeneinander versetzte Montagebohrungen (18) gebohrt sind.

4. Verstellbarer Spanndorn nach einem der vorstehenden Ansprüche,
**dadurch gekennzeichnet,**
daß der Führungsring (16) in einer Nut (22) in einem zylindrischen Abschnitt des Kerns (1) mitels einer in die Nut (22) hereinreichenden Feststellschraube (23) axial begrenzt beweglich geführt ist.

5. Verstellbarer Spanndorn nach einem der vorangehenden Ansprüche,
**dadurch gekennzeichnet,**
daß jede Spannbacke 88-10) wenigstens zwei abgestufte achsparallele Spannflächen (11-13) aufweist.

6. Verstellbarer Spanndorn nach einem der vorstehenden Ansprüche,
**dadurch gekennzeichnet,**
daß der Kern (1) an seinen Stirnflächen je eine zentrale kegelige Ausnehmung (19,20) aufweist.

## Claims

1. Adjustable expansion mandrel, in particular a test mandrel with a core and an annular body slid over this so that grooves (4-6) running in a tapered formation are formed out with an inclination (7) from a tapered section (2) of the core with in each groove a gripping jaw (8-10) which can be displaced substantially axially and having at least an axis parallel outer gripping surface (11-13) and an inner oblique sliding surface (14) which is adapted to the gradient of the inclination (7) of the groove and so that the gripping jaws (8-10) are held so that they are radially displaceable in an axially movable guide ring (16) and are pressed against the inclinations (7) of the grooves (4-6) under a spring tension acting on them, characterized in that only one profile spring (17) is disposed in the guide ring (16) for each gripping jaw (8-10) with this profile spring being held in the guide ring (16) by inherent tension in such a way that it is directed substantially in the circumferential direction in the guide ring (16) and abuts centrally on the gripping jaw (8-10).

2. Adjustable expansion mandrel according to claim 1, characterized in that radially running assembly bores (18) have been drilled in the guide ring (16) and in that in each case a nose standing away from each gripping jaw (8-12) can be displaced radially in the assembly bores.

3. Adjustable expansion mandrel according to claim 2, characterized in that three grooves which in each case take up a gripping jaw (8-10) are formed out of the core (1) so that they are offset in relation to each other by 120° in the circumferential direction of the core and in that three assembly bores (18) which are offset in relation to each other by the same angle are drilled in the guide ring (16).

4. Adjustable expansion mandrel according to one of the preceding claims, characterized in that the guide ring (16) is run in a groove (22) in a cylindrical section of the core (1) so that it is moveable in an axially limited manner by means of a locking screw (23) which reaches into the groove (22).

5. Adjustable expansion mandrel according to one of the preceding claims, characterized in that each gripping jaw (8-10) is provided with at least two stepped axis parallel gripping surfaces (11-13).

6. Adjustable expansion mandrel according to one of the preceding claims, characterized in that the core (1) is provided on its end faces in each case with a central tapered recess (19, 20).

## Revendications

1. Mandrin de serrage ajustable, en particulier mandrin de contrôle, comportant une pièce centrale et un corps annulaire glissé sur cette dernière, mandrin dans lequel des rainures (4 à 6) ayant une surface inclinée (7) sont formées dans un tronçon conique (2) de la pièce centrale, en s'étendant sous la forme d'un cône, tandis que, dans chaque rainure, est déplaçable, dans une direction essentiellement axiale, un mors (8 à 10) qui présente au moins une surface de serrage extérieure (11 à 13), parallèle à l'axe, et une surface de glissement intérieure (14) inclinée, qui est adaptée à la pente de la surface inclinée (7) de la rainure, les mors (8 à 10) étant maintenus déplaçables en direction radiale dans une bague de guidage (16) mobile axialement et étant repoussés, par la force de ressorts agissant sur eux, contre les surfaces inclinées (7) des rainures (4 à 6), caractérisé en ce que, dans la bague de guidage (16), est disposé, pour chaque mors (8 à 10), un seul ressort profilé (17) qui est retenu dans la bague de guidage (16) sous l'effet de sa tension propre, de telle façon qu'il soit orienté essentiellement dans le sens de la circonférence, dans la bague de guidage (16), et s'appuie contre le mors (8 à 10) en son centre.

2. Mandrin de serrage ajustable selon la revendication 1, caractérisé en ce que, dans la bague de guidage (16), sont percées des forures de montage (18) s'étendant en direction radiale, et en ce qu'un ergot saillant sur chaque mors (8 à 10) est déplaçable radialement dans une forure de montage respective.

3. Mandrin de serrage ajustable selon 1 revendication 2, caractérisé en ce que trois rainures recevant chacune un mors (8 à 10), sont formées dans la pièce centrale (1), dans le sens de sa circonférence en étant décalées de 120° l'une de l'autre, et en ce que trois forures de montage (18), décalées l'une de l'autre du même angle, sont percées dans la bague de guidage (16).

4. Mandrin de serrage ajustable selon l'une des revendications précédentes, caractérisé en ce que la bague de guidage (16) est guidée, sur une course de déplacement axial limitée, dans une rainure (22) ménagée dans un troncon, cylindrique de la pièce centrale (1), au moyen d'une vis de blocage (23) pénétrant dans la rainure (22).

5. Mandrin de serrage ajustable selon l'une des revendications précédentes, caractérisé en ce que chaque mors (8 à 10) présente au moins deux surfaces de serrage (11 à 13) parallèles à l'axe, formées en gradins.

6. Mandrin de serrage ajustable selon l'une des revendications précédentes, caractérisé en ce que, à chacune de ses surfaces d'extrémité, la pièce centrale (1) présente un évidement conique central (19, 20).
